# EUROPEAN PATENT APPLICATION

(11) **EP 4 060 186 A1**
(43) Date of publication of application: **21.09.2022**
(21) Application number: 21163603.0
(22) Date of filing: 19.03.2021
(51) Int. Cl.: F03D 9/19, F03D 9/25

(54) **A POWER AND FUEL GENERATION SYSTEM**

(71) Applicant: Siemens Gamesa Renewable Energy A/S, 7330 Brande (DK)
(72) Inventor: Egedal, Per, 7400 Herning (DK); Hoegh, Gustav, 7100 Vejle (DK)
(74) Representative: SGRE-Association

(57) **Abstract**

A power and fuel generation system (1) comprising an electric power generation unit (2) and an electrolytic unit (3), wherein the electric power generation unit (2) is coupled to the electrolytic unit (3) by means of an electric connection (7), wherein the electrolytic unit (3) comprises an input (4) and an output (5), wherein the power and fuel generation system (1) further comprises a system outlet (13) coupled to the output (5) of the electrolytic unit (3), wherein the electrolytic unit (3) is electrically powered by the electric power generation unit (2) to produce a fuel (6), wherein the fuel (6) can be taken out of the power and fuel generation system (1) by the system outlet (13).

## Description

The present invention relates to a power and fuel generation system. The present invention further relates to a method of operating a power and fuel generation system.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Wind turbines are placed at locations providing high wind amounts. These locations can be remote onshore locations or offshore locations on the sea. For the transportation of the electrical energy, the power generated by the generator of the wind turbine travels to a transmission substation of the wind farm, where it is converted to high voltage, usually between 155-765kV, for long distance transmission on the transmission grid over power lines. The transmission grid connects the remote location of the wind farm to a transformer station of the electrical grid, which transforms the electricity to a voltage compatible with the electrical grid.

A problem of remote wind farms is that the distance between the wind farm and the transformer station of the electrical grid needs to be bridged. Long power lines with very high installation costs are required.

The current development of the technology of wind turbines tends to an increased size of wind turbines for harvesting more wind energy, with longer blades and higher towers. Due to the increasing size of wind turbines, more power is supplied to the grid which is to be transported from the wind farm to the nearest input point of the grid. Increasing the power transferred over the long-distance power lines results in higher requirements for the cables and higher costs.

To reduce the amount of energy transferred by the power lines of the transmission grid or to avoid the use of long-distance power lines completely, an electrolytic unit can be installed in the vicinity of the wind turbine, which results in a power and fuel generation system. The power and fuel generation system generates electrical power by means of the generator of the wind turbine and fuel by means of an electrolytic unit driven by at least a part of the power of the wind turbine.

Electrolytic units are power-to-gas units configured to produce gaseous fuels. Hence, the energy produced by the wind turbine may be used in an electrolysis process to generate hydrogen and/or oxygen. These gases can be used afterwards for generation of electrical energy in fuel cells or to produce chemicals, such as ammonia or methane. The produced fuel from the electrolytic unit can be transported by using a pipeline or by pressurizing the gas into a container, which is less expensive than transporting electricity directly over long-distance power lines.

The use of electrolytic units in combination with wind turbines is known from the prior art, for example in the document US 5,592,028 A, where a plurality of electrolysis cells are connected to a wind farm and produce hydrogen by means of the electricity produced by the generators of the wind turbines.

In a wind farm with an electrolytic unit, the situation might arise when the electrolytic unit is disconnected from the pipelines, for example due to an obstruction or a damage of the pipelines or for maintenance purposes, or when the gas storage is full. In such situations, the electricity flow of the generator to the electrolytic unit is stopped so that no more gas is produced, and the wind turbine is operated under idle mode, where the generator does not produce any electricity.

Similarly, if a part of the power produced by the wind farm is further supplied to the electricity grid, situations might arise where the wind farm is disconnected from the electricity grid due to problems in the transmission grid or due to an oversupply of electricity to the electrical grid. In this case, the wind turbine will also be operated under idle mode, where the generator does not produce any electricity.

Under idle operation, the wind turbines do not cease to rotate, as wind continues to move the blades. However, the generator cannot act as a "brake" and convert the mechanical energy into electricity, as the electricity cannot be transferred to the electrolytic unit or to the electricity grid. Hence, the fatigue of the wind turbine components increases at idle mode operation due to the increased accumulated energy in the wind turbine.

During the idle mode, the amount of energy produced due to the rotation of the wind turbines is reduced as much as possible to minimize the fatigue of the components. For example, the nacelle is rotated to a specific yaw angle and/or the blades are rotated to a specific pitch angle to minimize the wind turbine load. This method is known from the prior art, as disclosed for example in EP 2 631 470 A1. However, due to the increased size of the new generation wind turbines and the higher loads generated by the wind turbines, the fatigue loading under idling conditions of the wind turbine components has greatly increased. The methods known from the prior art to minimize the fatigue of the wind turbine components for extended periods of time when the turbine is idling do not suffice to avoid a damage of the wind turbine caused by the increased fatigue loading due to the low structural damping of the wind turbine.

It is an object of the invention to reduce the load and/or energy of a power and fuel generation system during periods of time when the fuel produced by the electrolytic unit or the electricity produced by the electric power generation unit cannot be taken out of the system.

This is achieved by a power and fuel generation system according to claim 1 and by a method of operating a power and fuel generation system according to claim 14.

A power and fuel generation system according to the invention comprises an electric power generation unit and an electrolytic unit. The electric power generation unit is coupled to the electrolytic unit by means of an electric connection. The electrolytic unit comprises an input and an output. The power and fuel generation system further comprises a system outlet coupled to the output of the electrolytic unit. The electrolytic unit is electrically powered by the electric power generation unit to produce a fuel. The fuel can be taken out of the power and fuel generation system by the system outlet.

Hence, the electric power generation unit generates electric power and supplies the electrolytic unit with at least a part of the power generated, as both components are electrically coupled.

The electric power generation unit can be a fluctuating power generation facility, such as a wind turbine, a solar power plant, a wave power plant or a hydroelectric power plant. Due to the fluctuation of the power generation, depending for example on weather conditions or on water levels, it is difficult to foresee the power output of such a power plant to the electricity grid or to an energy storage device. The fuel can be taken out of the power and fuel generation system by a system outlet coupled to the output of the electrolytic unit.

Hence, at least a part of the energy produced by a fluctuating power generation facility can be used to power an electrolytic unit, so that the electricity grid is not overloaded by peaks of power generation of the fluctuating power generation facility. Additionally, if a problem in the output to the electricity grid occurs, the power can be redirected completely to the electrolytic unit so that only fuel is produced. The fuel produced is usually a gaseous fuel, which can be compressed and/or mixed with other components to a liquid state which is easier to store and/or transport.

The electrolytic unit can be used for example to produce hydrogen as a fuel from water. Hence, if the power and fuel generation system is installed in the vicinity of water, i.e. a river or at the sea, the electrolytic unit can use this water as an input to the electrolytic unit to produce hydrogen and oxygen as fuels. It is however also possible to generate other fuels with the electrolytic unit, e.g. methane or ammonia.

The electrolytic unit can also be a mixed gas generator which performs electrolysis and generates different gaseous fuels. For example, the electrolytic unit can perform electrolysis on water and carbon dioxide to generate a mixed gas made of hydrogen and carbon monoxide. Alternatively, hydrogen can be mixed with natural gas, which increases the hydrogen/carbon ratio of the fuel and gives it a flame speed up to eight times higher than compressed natural gas.

According to the invention, the power and fuel generation system further comprises a release unit coupled to the output of the electrolytic unit.

The release unit releases the fuel or the thermal energy generated by the fuel to the atmosphere or at least the release unit is configured to release the fuel or the thermal energy generated by the fuel to the atmosphere.

Hence, the release unit can release overproduced fuel or the thermal energy generated by for example burning the overproduced fuel to the atmosphere. Overproduced fuel is fuel which cannot be taken out of the system through the system outlet, for example because the fuel storage device is full or because there is an obstruction or maintenance work in the pipe network connected to the system outlet.

In such a case, prior art documents suggest operating the electric power generation unit under idling conditions and not to produce electricity. However, the solution proposed here is to continue with the electricity production of the electric power generation unit to power the electrolytic unit and release subsequently the produced fuel or the thermal energy of the produced fuel to the atmosphere by means of the release unit.

Hence, the energy which would otherwise be accumulated in the system can be transferred from the electric power generation unit to the electrolytic unit and this energy in form of fuel or thermal energy is released to the atmosphere, which considerably decreases the fatigue of the components of the electric power generation unit.

For a situation of a disruption in the electric power output out of the power and fuel generation system, i.e. due to a disconnection from the electricity grid, or the fuel output out of the power and fuel generation system, i.e. due to a full fuel storage device, maintenance works, or an obstructed pipe network, the system can continue with the energy production without increasing the fatigue of the components of the system, which would be the case if the system is operated in idle mode.

The fuel can be released directly to the atmosphere. In this case, some security measures can be considered to do this. For example, the rate of the fuel being released to the atmosphere should not be chosen in a range where concentrations of highly explosible air-fuel-mixtures can form. Alternatively, the fuel can be released in an environment far away from the workers or the equipment to avoid damages in case of explosion. Similarly, the fuel should not be released close to electrical equipment which could induce sparks and ignite the fuel.

According to a preferred embodiment of the invention, the release unit comprises a burner unit, wherein the burner unit is configured to burn the fuel and release the thermal energy generated by the fuel to the atmosphere.

The use of a burner unit to burn the fuel can be advantageous in order to avoid explosive concentrations of air-fuel-mixtures forming in the atmosphere. The burner unit can be an open flame, a combustion chamber or any other oxidizing means.

According to another preferred embodiment of the invention, the electric power generation unit is a wind turbine or a group of wind turbines.

The power fluctuations of wind turbines are higher and more unpredictable than other fluctuating power sources. Therefore, the combination of a wind farm with an electrolytic unit to a power and fuel generation system is an efficient way to account for fluctuations in the power generation and be able to use the surplus of energy to produce fuel in-site.

Additionally, the operation of wind turbines in idle mode increases the structural loading of the wind turbines due to the rotating parts of the drive train, which accumulate the mechanical energy as the blades do not cease to rotate due to the wind moving the blades. However, the generator cannot act as a "brake" and convert the mechanical energy into electricity, as the electricity cannot be delivered to the grid, thereby increasing the fatigue of the wind turbine components due to the increased accumulated energy in the wind turbine.

This situation can be avoided by avoiding idle mode operation of wind turbines with the use of a release unit. The overproduced electrical energy can be used to power the electrolytic unit and produce fuel, which can be then directly released or burnt and released to the atmosphere, thereby releasing energy out of the system and decreasing the fatigue of the wind turbine components.

According to another preferred embodiment of the invention, the power and fuel generation system further comprises a first controller unit between the output and the release unit controlling the amount of fuel to the release unit.

Additionally, the first controller unit can also be placed between the output and the system outlet to control the amount of fuel leaving the system through the system outlet.

Additionally, the first controller unit can also be placed both between the output and the system outlet and between the output and the release unit.

The first controller unit can be a fuel distribution device controlling the flow from the output of the electrolytic unit to the system outlet and/or to the release unit.

With this measure, the amount of fuel or of thermal energy released by the release unit can be more efficiently controlled, for example in order to release fuel or thermal energy to the atmosphere only in cases where there is an overproduction of fuel which cannot be taken out of the system by the system outlet. This measure also allows to continue redirecting the fuel out of the system and not to release any fuel in situations when fuel can be safely taken out of the system.

According to another preferred embodiment of the invention, the fuel is hydrogen, oxygen or a hydrogen-oxygen mixture. These fuels are common fuels produced by an electrolytic unit and can be easily released to the atmosphere or transported out of the system by the system outlet. Additionally, the release of these fuels is not harmful to the environment. Additionally, these fuels can be produced by the electrolysis of water, which is an easily available resource.

According to another preferred embodiment of the invention, the electrolytic unit comprises an electrolytic device. The electrolytic device is the part of the electrolytic unit configured to do the electrolysis to produce the fuel.

According to another preferred embodiment of the invention, the electrolytic unit further comprises a filter between the input and the electrolytic device. The use of a filter before the electrolytic device avoids the introduction of undesired components, such as sand, stones or animals, in the electrolytic device, avoiding a damage of the electrolytic device. For example, if the electric power generation unit is an onshore wind turbine installed in the vicinity of a river, the filter avoids sand and fish from the river from entering the electrolytic device. Similarly, if the electric power generation unit is an offshore wind turbine, the filter avoids sea animals or other objects from entering the electrolytic device.

According to another preferred embodiment of the invention, the electrolytic unit further comprises a desalination unit powered by the electric power generation unit, wherein saltwater entering through the input is desalinated in the desalination unit prior to flowing to the electrolytic device.

This measure is particularly useful for offshore wind turbines in order to desalinate the salt water and subsequently introduce the desalinated water in the electrolytic device to produce hydrogen and oxygen from the water molecules.

By connecting the desalination unit to the electric power generation unit, no external energy source is needed to power the desalination unit.

According to another preferred embodiment of the invention, the fuel or the thermal energy generated by the fuel is released to the atmosphere in the proximity of the electric power generation unit and/or in the proximity of the electrolytic unit. This measure provides an economic way to release the fuel or the thermal energy to the atmosphere. For example, a vent installed at the electrolytic device can be used to release the fuel to the atmosphere. Alternatively, a pipe or a duct can also be used to release the fuel.

According to another preferred embodiment of the invention, the fuel or the thermal energy generated by the fuel is released to the atmosphere at a distance sufficiently far removed from the electric power generation unit and/or from the electrolytic unit to avoid a damage of the power and fuel generation system or an auto-ignition of the fuel caused by an electric component of the power and fuel generation system.

According to another preferred embodiment of the invention, the power generated by the electric power generation unit is only transferred to the electrolytic unit and/or to other components of the power and fuel generation system.

This situation might arise when the electric power generation unit is disconnected completely from the electricity grid or from an electrical energy storage device to avoid idle operation of the electric power generation unit.

Additionally, the electric power generation unit can be designed in such a way that the power produced by the electric power generation unit can be used completely to power the electrolytic unit and/or to other components of the power and fuel generation system. This avoids the use of long-distance power lines of the transmission grid completely, as the electric power generation unit is not connected to the electricity grid at any time, thereby reducing the costs, as these power lines are expensive.

The power generated by the electric power generation can be used to power the electrolytic unit, but also to power other components of the power and fuel generation system, such as controllers or valves.

According to another preferred embodiment of the invention, the electric power generation unit is further coupled to an electricity grid by means of an electric connection, wherein at least a part of the power generated by the electric power generation unit is transferred to the electricity grid.

The electric power generation unit generates power which can be transferred to both the electricity grid and to the electrolytic unit. Hence, for electric power generation, the power flow from the electric power generation unit to the electricity grid and/or to the electrolytic unit can vary depending on the demand for electric power and/or fuel. This also means that for the case of a disconnection of the electric power generation unit with the electricity grid, the electric power can be diverted to the electrolytic unit to produce fuel. Similarly, for the case of a disconnection of the electric power generation unit with the components attached to the system outlet to take the fuel out of the system, the electric power can be diverted to the electricity grid. Additionally, for a situation where no power can be supplied to the electricity grid or fuel can be taken out of the power and fuel generation system by the system outlet, the overproduced electricity can be used to produce fuel which is then released in the release unit.

According to another preferred embodiment of the invention, the power and fuel generation system further comprises a second controller unit between the electric power generation unit and the electrolytic unit controlling the power output to the electrolytic unit and/or to the electric grid.

This second controller unit allows to control the distribution of the electric power from the electric power generation unit and the electrolytic unit and/or the electricity grid depending on the needs for electric power and/or fuel or in a situation where a problem arises at the electric grid or at the electrolytic unit, to be able to divert the electric power to the other unit. Hence, overproduced electricity which is neither transferred to the electricity grid nor stored in an electric power storage device is transferred to the electrolytic unit to generate the fuel.

According to another preferred embodiment of the invention, the system outlet is connected to a pipe or to a pipe network. The produced fuel from the electrolytic unit can be transported by using a pipeline, which is less expensive than transporting electricity directly over long-distance power lines.

According to another preferred embodiment of the invention, the overproduction of fuel is caused by a disconnection of the system outlet from the pipes and/or by an obstruction and/or a problem in the pipes and/or the pipe network. This overproduced fuel can be redirected to the release unit to be released.

According to another preferred embodiment of the invention, the system outlet is connected to a fuel storage. The produced fuel from the electrolytic unit can be transported by for example pressurizing the fuel into a container, which is less expensive than transporting electricity directly over long-distance power lines.

According to another preferred embodiment of the invention, the overproduction of fuel is caused by a full capacity of the fuel storage. This overproduced fuel can be redirected to the release unit to be released.

According to another preferred embodiment of the invention, the overproduction of fuel is caused by an overproduction of electrical energy by the electric power generation unit. The overproduction of electrical energy by the electric power generation unit can be caused due to fluctuation in the power generation of the electric power generation unit or due to a low demand in the electricity grid. The overproduced fuel can be redirected to the release unit to be released.

According to another preferred embodiment of the invention, during an overproduction of fuel, the overproduced fuel is burnt by the burner unit.

Another aspect of the invention relates to a method of operating a power and fuel generation system comprising an electric power generation unit and an electrolytic unit, said method comprising the steps of detecting an overproduction of fuel, and increasing the flow from the electrolytic unit to the release unit to release the fuel or the thermal energy generated by the fuel to the atmosphere.

According to another preferred embodiment of the invention, the method of operating a power and fuel generation system comprising an electric power generation unit and an electrolytic unit comprises the steps of detecting an overproduction of electrical energy in the electric power generation unit, transferring the overproduced electrical energy to the electrolytic unit to produce fuel, and increasing the flow from the electrolytic unit to the release unit to release the fuel or the thermal energy generated by the fuel to the atmosphere.

In order to facilitate the understanding of the characteristics of the invention and being an integral part of this specification, some drawing sheets are attached on which figures, with an illustrative but not limiting character, the following is represented:
Figure 1 shows a power and fuel generation system of the prior art, wherein the power produced by the electric power generation unit is completely transferred to the electrolytic unit.
Figure 2 shows a power and fuel generation system of the prior art, wherein the power produced by the electric power generation unit is transferred to the electricity grid and to the electrolytic unit.
Figure 3 shows a power and fuel generation system according to one embodiment of the invention, wherein the power produced by the electric power generation unit is completely transferred to the electrolytic unit.
Figure 4 shows a power and fuel generation system according to another embodiment of the invention, wherein the power produced by the electric power generation unit is transferred to the electricity grid and to the electrolytic unit.
Figure 5 shows a power and fuel generation system according to another embodiment of the invention with a wind turbine as the electric power generation unit.
Figure 6 shows a power and fuel generation system according to another embodiment of the invention with a wind turbine as the electric power generation unit.

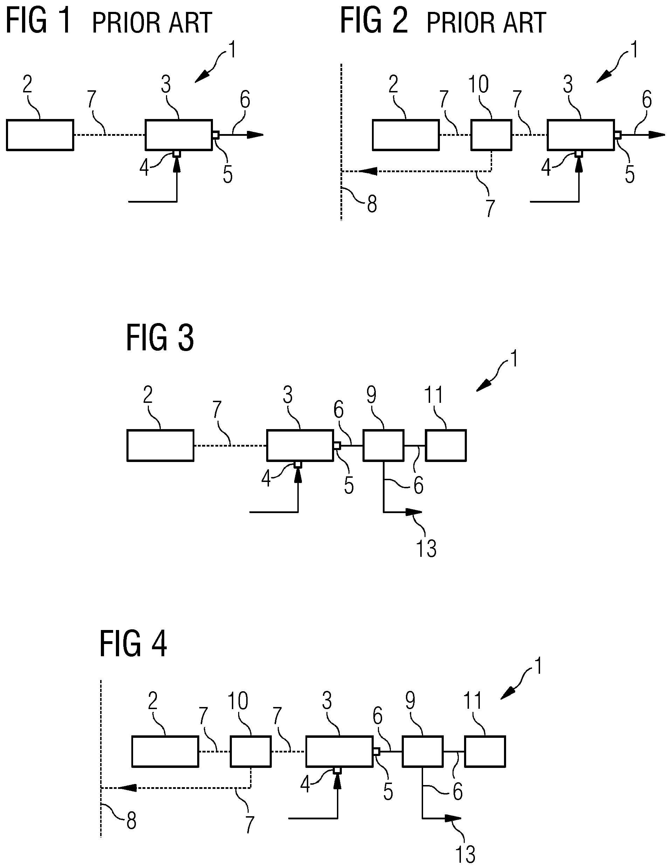

Figure 1 shows a power and fuel generation system 1 of the prior art, wherein the power produced by the electric power generation unit 2 is completely transferred to the electrolytic unit 3.

The electric power generation unit 2 is coupled to the electrolytic unit 3 by means of an electric connection 7.

The electrolytic unit 3 comprises an input 4 and an output 5. The electrolytic unit 3 is electrically powered by the electric power generation unit 2 to produce a fuel 6. To produce the fuel 6, an input fluid enters through the input 4 of the electrolytic unit 3 and is then transformed to a fuel 6 in the electrolytic unit 3 by means of electric power coming from the electric power generation unit 2. The fuel 6 exits the electrolytic unit 3 by the output 5.

Figure 2 shows a power and fuel generation system 1 of the prior art, wherein the power produced by the electric power generation unit 2 is transferred to the electricity grid and to the electrolytic unit 3. The electrolytic unit 3 works in the same way as shown in Figure 1.

A second controller unit 10 is added in the electric connection 7 between the electric power generation unit 2 and the electrolytic unit 3 to distribute the electric power between the electric power generation unit 2 and the electrolytic unit 3 and between the electric power generation unit 2 and the electricity grid 8. Hence, the amount of electric power can be varied depending on the demand for electric power and/or fuel.

Figure 3 shows a power and fuel generation system 1 according to one embodiment of the invention, wherein the power produced by the electric power generation unit 2 is completely transferred to the electrolytic unit 3.

This power and fuel generation system 1 further comprises a release unit 11 coupled to the output 5 of the electrolytic unit 3, wherein release unit 11 is configured to release the fuel 6 or the thermal energy generated by the fuel 6 to the atmosphere.

This power and fuel generation system 1 further comprises a system outlet 13 coupled to the output 5 of the electrolytic unit 3, wherein the fuel 6 can be taken out of the power and fuel generation system 1 by the system outlet 13.

This power and fuel generation system 1 further comprises a first controller unit 9 between the output 5 and the release unit 11 and between the output 5 and the system outlet 13 controlling the amount of fuel 6 to the release unit 11 and/or to the outlet 13. The first controller unit 9 can be a fuel distribution device controlling the flow from the output 5 of the electrolytic unit 3 to the system outlet 13 and/or to the release unit 11.

Figure 4 shows a power and fuel generation system 1 according to another embodiment of the invention, wherein the power produced by the electric power generation unit 2 is transferred to the electricity grid and to the electrolytic unit 3. The electrolytic unit 3 works in the same way as shown in Figure 3 and is coupled to a first controller unit 9 controlling the amount of fuel 6 to the release unit 11 and/or to the outlet 13.

A second controller unit 10 is added in the electric connection 7 between the electric power generation unit 2 and the electrolytic unit 3 to distribute the electric power between the electric power generation unit 2 and the electrolytic unit 3 and between the electric power generation unit 2 and the electricity grid 8. Hence, the amount of electric power can be varied depending on the demand for electric power and/or fuel 6. For overproduced electric power or overproduced fuel 6, the overproduced electric power can be used to produce fuel 6 and/or the overproduced fuel 6 can be released in the release unit 11.

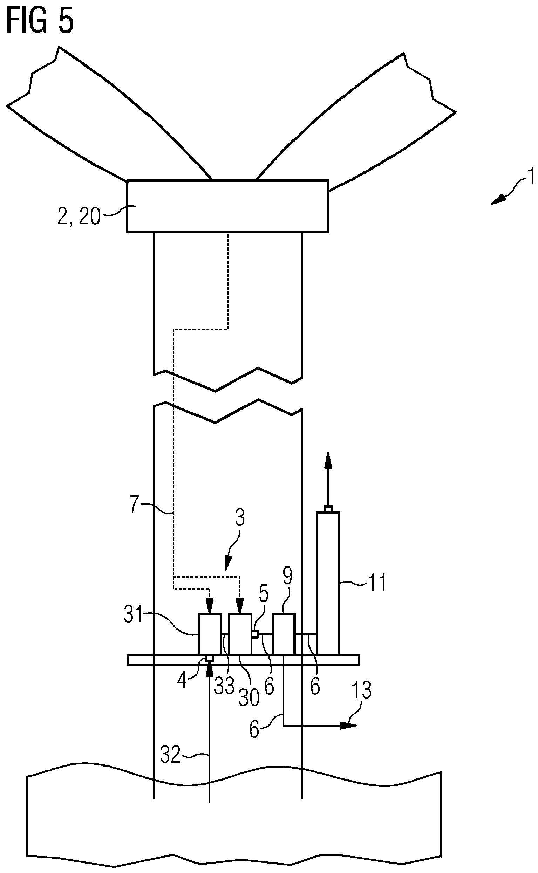

Figure 5 shows a power and fuel generation system 1 according to another embodiment of the invention with a wind turbine 20 as the electric power generation unit 2. The wind turbine 20 is an offshore wind turbine 20 and is operated in a setup like the one shown in Figure 3. The electric power generated by the wind turbine 20 is used to drive the electrolytic unit 3 to produce a fuel 6.

The electrolytic unit 3 comprises a desalination unit 31 powered by the electric power generation unit 2, an electrolytic device 30 powered by the electric power generation unit 2, a connection between the desalination unit 31 and the electrolytic device 30 to transfer the input fluid, an input 4 and an output 5. Saltwater 32 entering through the input 4 is desalinated in the desalination unit 31 prior to flowing to the electrolytic device 30, which transforms the water into oxygen and hydrogen which can be used as a fuel 6. The saltwater 32 is taken directly from the sea.

The first controller unit 9 between the output 5 and the release unit 11 and between the output 5 and the system outlet 13 controls the amount of fuel 6 to the release unit 11 and/or to the outlet 13. In the case of overproduced fuel 6, the overproduced fuel 6 is directed by the first controller unit 9 to the release unit 11 and is released from there to the atmosphere. The release unit can comprise a burner unit 12 to burn the overproduced fuel 6 and release thermal energy to the atmosphere.

The height of the vent or output of the release unit 11 can be chosen sufficiently high to avoid an auto-ignition of the fuel 6 caused by a spark of an electric component of the power and fuel generation system 1.

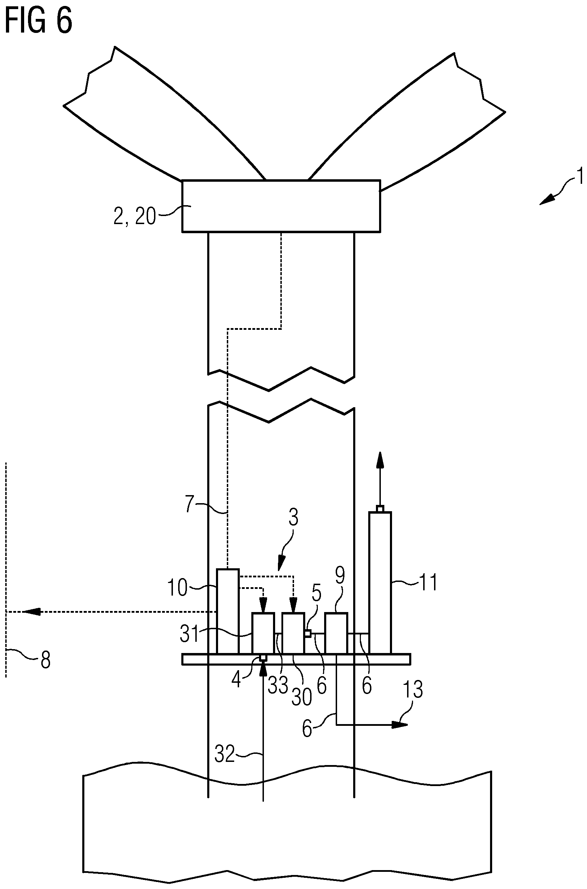

Figure 6 shows a power and fuel generation system 1 according to another embodiment of the invention with a wind turbine 20 as the electric power generation unit 2. The electrolytic unit 3 works in the same way as shown in Figure 5 and is coupled to a first controller unit 9 controlling the amount of fuel 6 to the release unit 11 and/or to the outlet 13.

A second controller unit 10 is added in the electric connection 7 between the electric power generation unit 2 and the electrolytic unit 3 to distribute the electric power between the electric power generation unit 2 and the electrolytic unit 3 and between the electric power generation unit 2 and the electricity grid 8. Hence, the amount of electric power can be varied depending on the demand for electric power and/or fuel 6. For overproduced electric power or overproduced fuel 6, the overproduced electric power can be used to produce fuel 6 and/or the overproduced fuel 6 can be released in the release unit 11.

### Reference numbers

- 1: Power and fuel generation system
- 2: Electric power generation unit
- 3: Electrolytic unit
- 4: Input
- 5: Output
- 6: Fuel
- 7: Electric connection
- 8: Electricity grid
- 9: First controller unit
- 10: Second controller unit
- 11: Release unit
- 12: Burner unit
- 13: System outlet
- 20: Wind turbine
- 30: Electrolytic device
- 31: Desalination unit
- 32: Saltwater
- 33: Desalinated water

## Claims

1. A power and fuel generation system (1) comprising an electric power generation unit (2) and an electrolytic unit (3), wherein the electric power generation unit (2) is coupled to the electrolytic unit (3) by means of an electric connection (7),
wherein the electrolytic unit (3) comprises an input (4) and an output (5),
wherein the power and fuel generation system (1) further comprises a system outlet (13) coupled to the output (5) of the electrolytic unit (3),
wherein the electrolytic unit (3) is electrically powered by the electric power generation unit (2) to produce a fuel (6), wherein the fuel (6) can be taken out of the power and fuel generation system (1) by the system outlet (13), **characterized in that** the power and fuel generation system (1) further comprises a release unit (11) coupled to the output (5) of the electrolytic unit (3), wherein the release unit (11) releases the fuel (6) or the thermal energy generated by the fuel (6) to the atmosphere.

2. The power and fuel generation system (1) according to claim 1, **characterized in that** the release unit (11) comprises a burner unit (12), wherein the burner unit (12) is configured to burn the fuel (6) and release the thermal energy generated by the fuel (6) to the atmosphere.

3. The power and fuel generation system (1) according to claim 1 or 2, **characterized in that** the electric power generation unit (2) is a wind turbine (20) or a group of wind turbines (20).

4. The power and fuel generation system (1) according to any of the preceding claims, **characterized in that** said power and fuel generation system (1) further comprises a first controller unit (9) between the output (5) and the release unit (11) controlling the amount of fuel (6) to the release unit (11).

5. The power and fuel generation system (1) according to any of the preceding claims, **characterized in that** the fuel (6) is hydrogen, oxygen or a hydrogen-oxygen mixture.

6. The power and fuel generation system (1) according to claims 1 to 5, **characterized in that** the fuel (6) or the thermal energy generated by the fuel (6) is released to the atmosphere in the proximity of the electric power generation unit (2) and/or in the proximity of the electrolytic unit (3) .

7. The power and fuel generation system (1) according to claims 1 to 5, **characterized in that** the fuel (6) or the thermal energy generated by the fuel (6) is released to the atmosphere at a distance sufficiently far removed from the electric power generation unit (2) to avoid a damage of the power and fuel generation system (1) or an auto-ignition of the fuel (6) caused by an electric component of the power and fuel generation system (1).

8. The power and fuel generation system (1) according to any of the claims 1 to 7, **characterized in that** the power generated by the electric power generation unit (2) is only transferred to the electrolytic unit (3) and/or to other components of the power and fuel generation system (1).

9. The power and fuel generation system (1) according to any of the claims 1 to 7, **characterized in that** the electric power generation unit (2) is further coupled to an electricity grid (8) by means of an electric connection (7), wherein at least a part of the power generated by the electric power generation unit (2) is transferred to the electricity grid (8) .

10. The power and fuel generation system (1) according to claim 9, **characterized in that** said power and fuel generation system (1) further comprises a second controller unit (10) between the electric power generation unit (2) and the electrolytic unit (3) controlling the power output to the electrolytic unit (3) and/or to the electricity grid (8).

11. The power and fuel generation system (1) according to any of the preceding claims, **characterized in that** the system outlet (13) is connected to a pipe or to a pipe network.

12. The power and fuel generation system (1) according to any of the preceding claims, **characterized in that** the system outlet (12) is connected to a fuel storage.

13. The power and fuel generation system (1) according to any of the preceding claims, **characterized in that** during an overproduction of fuel (6), the overproduced fuel (6) or the thermal energy generated by the overproduced fuel (6) is released to the atmosphere by the release unit (11).

14. A method of operating a power and fuel generation system (1) according to any of the claims 1 to 13 comprising the steps of
- detecting an overproduction of fuel (6), and
- increasing the flow from the electrolytic unit (3) to the release unit (11) to release the fuel (6) or the thermal energy generated by the fuel (6) to the atmosphere.

15. The method of operating a power and fuel generation system (1) according to claim 14, comprising the steps of
- detecting an overproduction of electrical energy in the electric power generation unit (2),
- transferring the overproduced electrical energy to the electrolytic unit (3) to produce fuel (6), and
- increasing the flow from the electrolytic unit (3) to the release unit (11) to release the fuel (6) or the thermal energy generated by the fuel (6) to the atmosphere.
